# EUROPÄISCHE PATENTANMELDUNG

(11) **EP 1 398 861 A1**
(43) Veröffentlichungstag der Anmeldung: **17.03.2004**
(21) Anmeldenummer: 02405799.4
(22) Anmeldetag: 13.09.2002
(51) Int. Cl.: H02H 7/122

(54) **Umrichterschaltung sowie Verfahren zum Betrieb einer solchen Umrichterschaltung**

(71) Anmelder: ABB RESEARCH LTD., 8050 Zürich (CH)
(72) Erfinder: Meysenc, Luc, 5405 Baden-Dättwil (CH); Wieser, Rudolf, 5405 Baden-Dättwil (CH)
(74) Vertreter: ABB Patent Attorneys

(57) **Zusammenfassung**

Es wird eine Umrichterschaltung zur Schaltung von n Spannungsniveaus, wobei n ≥ 3 ist, angegeben, bei dem n-2 Verschaltpunkte (10) vorgesehen sind, wobei jedem Verschaltpunkt (10) jeweils eine Klemmschaltgruppe (8) aus jedem Teilumrichtersystem (5) der Umrichterschaltung zugeordnet ist und die zugeordneten Klemmschaltgruppen (8) mit Klemmschaltgruppenanschlüssen (9) am zugehörigen Verschaltpunkt (10) miteinander verbunden sind. Zwischen jedem Verschaltpunkt (10) und einem zugeordneten Teilanschluss (4) eines Gleichspannungskreises (1) ist ein Stromsensor (12) eingeschaltet, wobei jeder Stromsensor (12) mit einer Stromüberwachungseinrichtung (13) einer Ansteuerschaltung (11 ) verbunden ist. Darüber hinaus ist ein Verfahren zum Betrieb einer solchen Umrichterschaltung angegeben.

## Beschreibung

### Technisches Gebiet

Die Erfindung bezieht sich auf das Gebiet der Leistungselektronik. Sie geht aus von einer Umrichterschaltung sowie einem Verfahren zum Betrieb einer solchen Umrichterschaltung gemäss dem Oberbegriff der unabhängigen Ansprüche.

### Stand der Technik

Ansteuerbare bidirektionale Leistungshalbleiterschalter werden derzeit vermehrt in der Umrichtertechnik und insbesondere in Umrichterschaltungen für elektrische Antriebe oder Netzkopplungen eingesetzt. Diese ansteuerbaren bidirektionalen Leistungshalbleiterschalter sind jeweils durch einen ansteuerbaren Leistungshalbleiter, insbesondere feldgesteuerter Leistungshalbleiter wie beispielsweise Bipolartransistor mit isoliert angeordneter Gateelektrode (IGBT) oder Leistungs-MOSFET, und einer dazu antiparallel geschalteten Diode gebildet. Die ansteuerbaren bidirektionalen Leistungshalbleiterschalter werden über ihre Ansteuerelektrode mit Hilfe einer Ansteuerschaltung durch Anlegen eines entsprechenden Ansteuersignals in Form einer Spannung angesteuert.

Bei Fehlerfällen kann in der Umrichterschaltung in einzelnen oder mehreren ansteuerbaren bidirektionalen Leistungshalbleiterschaltern ein Kurzschluss im Hauptstrompfad des jeweiligen ansteuerbaren bidirektionalen Leistungshalbleiterschalters, d.h. zwischen der Anode und Kathode des jeweiligen ansteuerbaren bidirektionalen Leistungshalbleiterschalters auftreten. Im Kurzschlussfall steigt dabei der Strom im Hauptstrompfad sehr schnell auf eine hohe Stromamplitude an, so dass das Stromintegral über der Zeit unzulässig hohe Werte annimmt. Gleichzeitig liegt zwischen Anode und Kathode des bidirektionalen Leistungshalbleiterschalters eine hohe Anoden-Kathodenspannung an. Daraus resultiert eine extrem hohe momentane Verlustleistung, die den ansteuerbaren bidirektionalen Leistungshalbleiterschalter zerstören kann.

Ein geeignetes Verfahren zum Abschalten eines ansteuerbaren bidirektionalen Leistungshalbleiterschalters, insbesondere eines IGBTs mit einer antiparallel geschalteten Diode, ist in der DE 199 18 966 A1 offenbart. Darin wird die Anoden-Kathodenspannung des ansteuerbaren bidirektionalen Leistungshalbleiterschalters mittels einer Überwachungseinrichtung, insbesondere einer Entsättigungsüberwachungseinrichtung überwacht. Tritt ein unzulässiger Wert der Anoden-Kathodenspannung am Hauptstrompfad auf, wird ein Rückmeldesignal ausgegeben, welches der Ansteuerschaltung zugeführt wird. Auf das Rückmeldesignal hin wird der ansteuerbare bidirektionale Leistungshalbleiterschalter dann abgeschaltet.

Bei Umrichterschaltungen zur Schaltung von n Spannungsniveaus, wobei n ≥ 3 ist, sind n-1 in Serie geschaltete Kondensatoren gleichspannungsseitig mit der Umrichterschaltung verbunden und bilden einen Gleichspannungskreis. In "Multilevel Converters - A New Breed of Power Converters, IEEE TRANSACTIONS ON INDUSTRY APPLICATIONS, Vol. 32, No. 3, May/June 1996" ist eine solche Umrichterschaltung angegeben. Darin sind mindestens zwei Teilumrichtersysteme vorgesehen, die jeweils durch eine erste Schaltgruppe und eine zweite Schaltgruppe mit jeweils n-1 in Serie geschalteten ansteuerbaren bidirektionalen Leistungshalbleiterschaltern und durch n-2 Klemmschaltgruppen mit jeweils im wesentlichen zwei in Serie geschalteten Dioden gebildet sind. Weiterhin ist jede Klemmschaltgruppe eines Teilumrichtersystems mit der ersten Schaltgruppe und der zweiten Schaltgruppe verbunden, wobei und der Verbindungspunkt der beiden Dioden einer jeden Klemmschaltgruppe eines Teilumrichtersystems einen Klemmschaltgruppenanschluss bildet. Ferner weist die Umrichterschaltung n-2 Verschaltpunkte auf, wobei jedem Verschaltpunkt jeweils eine Klemmschaltgruppe aus jedem Teilumrichtersystem zugeordnet ist und die zugeordneten Klemmschaltgruppen mit den Klemmschaltgruppenanschlüssen am zugehörigen Verschaltpunkt miteinander verbunden sind. Desweiteren sind bei der Umrichterschaltung n-2 durch jeweils zwei benachbarte und miteinander verbundene Kondensatoren des Gleichspannungskreises gebildete Teilanschlüsse vorgesehen, wobei jeder Verschaltpunkt mit jeweils einem dem Verschaltpunkt zugeordneten Teilanschluss verbunden ist. Gängigerweise sind die ansteuerbaren bidirektionalen Leistungshalbleiterschaltern der ersten Schaltgruppen und zweiten Schaltgruppen der Teilumrichtersysteme mit einer eingangs genannten Ansteuerschaltung verbunden.

Problematisch bei einer vorstehend beschriebenen Umrichterschaltung ist, dass zur Abschaltung eines auftretenden Überstromes der Umrichterschaltung die Anoden-Kathodenspannungen aller ansteuerbaren bidirektionalen Leistungshalbleiterschalter stets überwacht werden müssen. Dies bedingt aber bei Umrichterschaltungen mit einer Vielzahl solcher Leistungshalbleiterschalter, wie bei der vorstehend beschriebenen und in "Multilevel Converters - A New Breed of Power Converters, IEEE TRANSACTIONS ON INDUSTRY APPLICATIONS, Vol. 32, No. 3, May/June 1996" angegebenen Umrichterschaltung, dass für jeden ansteuerbaren bidirektionalen Leistungshalbleiterschalter eine Überwachungseinrichtung vorgesehen werden muss, wodurch ein enormer Platzbedarf und hohe Kosten resultieren. Zudem muss von jeder Überwachungseinrichtung ein Rückmeldesignal zur Ansteuerschaltung geführt werden, wodurch eine unerwünschte erhöhte Störungsanfälligkeit auftreten kann. Ein schnelles und einfaches Abschalten des auftretenden Überstromes der Umrichterschaltung ist dann nicht mehr gewährleistet. Weiterhin sind zur Führung der Rückmeldesignale aufwendige und komplizierte Signalführungen über eine grosse Anzahl an isoliert ausgeführten Leitungen notwendig. Damit erhöhen sich aber die Kosten und der Platzbedarf weiter.

### Darstellung der Erfindung

Aufgabe der Erfindung ist es deshalb, eine Umrichterschaltung anzugeben, die möglichst unkompliziert, robust und wenig störungsanfällig ist. Ferner ist ein Verfahren zum Betrieb einer solchen Umrichterschaltung anzugeben, welches eine einfache, störungsunempfindliche und schnelle Abschaltung eines Überstromes der Umrichterschaltung ohne eine Überwachung der Hauptstrompfade ansteuerbarer bidirektionaler Leistungshalbleiterschalter der Umrichterschaltung ermöglicht. Diese Aufgaben werden durch die Merkmale des Anspruchs 1, 2, 9 bzw. 10 gelöst. In den Unteransprüchen sind vorteilhafte Weiterbildungen der Erfindung angegeben.

Bei einer ersten Ausführungsform der erfindungsgemässen Umrichterschaltung zur Schaltung von n Spannungsniveaus, wobei n ≥ 3 ist, ist ein durch n-1 in Serie geschaltete Kondensatoren gebildeter Gleichspannungskreis vorgesehen, der einen ersten Hauptanschluss und einen zweiten Hauptanschluss und n-2 durch jeweils zwei benachbarte und miteinander verbundene Kondensatoren gebildete Teilanschlüsse aufweist. Weiterhin sind mindestens zwei Teilumrichtersysteme vorgesehen, die jeweils durch eine erste Schaltgruppe und eine zweite Schaltgruppe mit jeweils n-1 in Serie geschalteten ansteuerbaren bidirektionalen Leistungshalbleiterschaltern und durch n-2 Klemmschaltgruppen mit jeweils zwei in Serie geschalteten Leistungshalbleiterschaltern gebildet sind. Jede Klemmschaltgruppe eines Teilumrichtersystems ist zudem mit der ersten Schaltgruppe und der zweiten Schaltgruppe verbunden, wobei der Verbindungspunkt der Leistungshalbleiterschalter einer jeden Klemmschaltgruppe eines Teilumrichtersystems einen Klemmschaltgruppenanschluss bildet. Desweiteren sind n-2 Verschaltpunkte vorgesehen, wobei jedem Verschaltpunkt jeweils eine Klemmschaltgruppe aus jedem Teilumrichtersystem zugeordnet ist und die zugeordneten Klemmschaltgruppen mit den Klemmschaltgruppenanschlüssen am zugehörigen Verschaltpunkt miteinander verbunden sind. Ferner ist jeder Verschaltpunkt mit jeweils einem dem Verschaltpunkt zugeordneten Teilanschluss verbunden. Darüber hinaus sind die ansteuerbaren bidirektionalen Leistungshalbleiterschaltern der ersten Schaltgruppen und zweiten Schaltgruppen der Teilumrichtersysteme mit einer Ansteuerschaltung verbunden. Erfindungsgemäss ist zwischen jedem Verschaltpunkt und dem zugeordneten Teilanschluss ein Stromsensor eingeschaltet, wobei jeder Stromsensor mit einer Stromüberwachungseinrichtung der Ansteuerschaltung verbunden ist. Vorteilhaft kann durch die vorstehend beschriebene Anordnung des Stromsensors auf eine aus dem Stand der Technik bekannte und für jeden ansteuerbaren bidirektionalen Leistungshalbleiterschalter vorgesehene Überwachungseinrichtung verzichtet werden. Dadurch kann auch die Signalführung der Rückmeldesignale einer jeden Überwachungseinrichtung zur Ansteuerschaltung, beispielsweise durch Leitungen entfallen, wodurch sich die Umrichterschaltung vorteilhaft signifikant vereinfacht, einen geringen Platzbedarf aufweist und sich kostengünstig realisieren lässt. Darüber hinaus resultiert aus dieser Vereinfachung ein unkomplizierter Aufbau der erfindungsgemässen Umrichterschaltung, die zudem robust und wenig störungsanfällig ist, so dass vorteilhaft ein auftretender Überstrom der Umrichterschaltung problemlos und schnell detektiert werden kann und auf besonders einfache und schnelle Weise abgeschalten werden kann, ohne dass die Umrichterschaltung durch den Überstrom grösseren Schaden nimmt.

Alternativ zu dem zwischen jedem Verschaltpunkt und dem zugeordneten Teilanschluss eingeschalteten Stromsensor der ersten Ausführungsform der erfindungsgemässen Umrichterschaltung ist bei einer zweiten Ausführungsform der erfindungsgemässen Umrichterschaltung zwischen jedem Klemmschaltgruppenanschluss und dem zugehörigen Verschaltpunkt ein Stromsensor eingeschaltet, wobei jeder Stromsensor mit der Stromüberwachungseinrichtung der Ansteuerschaltung verbunden ist. Neben den vorstehend bezüglich der ersten Ausführungsform der erfindungsgemässen Umrichterschaltung genannten Vorteilen kann durch die zweite Ausführungsform der Umrichterschaltung nach der Erfindung ein auftretender Überstrom in einem Teilumrichtersystem der Umrichterschaltung besonders vorteilhaft problemlos und schnell detektiert werden, wobei der Überstrom durch selektives Abschalten des betroffenen Teilumrichtersystems dann auf besonders einfache und schnelle Weise abgeschalten werden kann, ohne dass das betroffenen Teilumrichtersystem und die gesamte Umrichterschaltung durch den Überstrom grösseren Schaden nimmt. Ein weiterer Normalbetrieb der von dem Überstrom nicht betroffenen Teilumrichtersysteme und damit der Umrichterschaltung ist möglich, so dass sich die erfindungsgemässe Umrichterschaltung auch bei Auftreten eines Überstromes in einem Teilumrichtersystem durch eine besonders hohe Verfügbarkeit auszeichnet.

Beim erfindungsgemässen Verfahren zum Betrieb der erfindungsgemässen Umrichterschaltung nach der ersten Ausführungsform werden die ansteuerbaren bidirektionalen Leistungshalbleiterschalter der ersten Schaltgruppen und zweiten Schaltgruppen der Teilumrichtersysteme mittels der mit den ansteuerbaren bidirektionalen Leistungshalbleiterschaltern verbundenen Ansteuerschaltung angesteuert. Erfindungsgemäss wird ein zwischen jeweils einem Verschaltpunkt und dem zugeordneten Teilanschluss fliessender Strom mittels des zwischen dem Verschaltpunkt und dem zugeordneten Teilanschluss eingeschalteten Stromsensors gemessen, wobei der Strom weiterhin der Stromüberwachungseinrichtung der Ansteuerschaltung zugeführt wird und auf einen der Stromüberwachungseinrichtung zugeführten Stromreferenzwert hin überwacht wird. Falls der Strom den Stromreferenzwert überschreitet, werden dann die ansteuerbaren bidirektionalen Leistungshalbleiterschalter der ersten Schaltgruppe und zweiten Schaltgruppe eines jeden Teilumrichtersystems derart angesteuert, dass die Umrichterschaltung abgeschaltet wird. Das erfindungsgemässe Verfahren zum Betrieb der erfindungsgemässen Umrichterschaltung ermöglicht somit eine schnelle und problemlose Detektion eines auftretenden Überstromes der Umrichterschaltung, der dann durch Abschalten der Umrichterschaltung einfach schnell abgeschaltet wird, wobei es vorteilhafterweise bei der Detektion und der Abschaltung des Überstromes keiner Überwachung der Hauptstrompfade der ansteuerbaren bidirektionalen Leistungshalbleiterschalter der Umrichterschaltung bedarf. Desweiteren kann die erfindungsgemässe Umrichterschaltung durch das erfindungsgemässe Verfahren effektiv vor Beschädigung oder Zerstörung durch den Überstrom geschützt werden.

Alternativ zum Verfahren zum Betrieb der erfindungsgemässen Umrichterschaltung nach der ersten Ausführungsform wird beim erfindungsgemässen Verfahren zum Betrieb der erfindungsgemässen Umrichterschaltung nach der zweiten Ausführungsform ein in jeweils ein Teilumrichtersystem fliessender Strom mittels des zwischen dem Klemmschaltgruppenanschluss und dem zugehörigen Verschaltpunkt eingeschalteten Stromsensors gemessen, wo. bei der Strom desweiteren der Stromüberwachungseinrichtung der Ansteuerschaltung zugeführt wird und auf einen der Stromüberwachungseinrichtung zugeführten Stromreferenzwert hin überwacht wird. Falls nun der Strom den Stromreferenzwert überschreitet, werden die ansteuerbaren bidirektionalen Leistungshalbleiterschalter der ersten Schaltgruppe und zweiten Schaltgruppe des zugehörigen Teilumrichtersystems derart angesteuert werden, dass das entsprechende Teilumrichtersystem abgeschaltet wird. Neben den vorstehend bezüglich des Verfahrens zum Betrieb der erfindungsgemässen Umrichterschaltung gemäss der ersten Ausführungsform genannten Vorteilen ermöglicht das erfindungsgemässe Verfahren zum Betrieb der erfindungsgemässen Umrichterschaltung nach der zweiten Ausführungsform eine schnelle und problemlose Detektion eines auftretenden Überstromes in einem Teilumrichtersystem der Umrichterschaltung, der dann einfach und schnell durch selektives Abschalten des betroffenen Teilumrichtersystems abgeschaltet wird. Ferner kann das vom Überstrom betroffene Teilumrichtersystem durch dessen Abschaltung effektiv vor Zerstörung durch den Überstrom geschützt werden. Weiterhin ermöglicht das erfindungsgemässe Verfahren zum Betrieb der zweiten erfindungsgemässen Umrichterschaltung den weiteren Normalbetrieb der von dem Überstrom nicht betroffenen Teilumrichtersysteme und damit der Umrichterschaltung.

Diese und weitere Aufgaben, Vorteile und Merkmale der vorliegenden Erfindung werden aus der nachfolgenden detaillierten Beschreibung bevorzugter Ausführungsformen der Erfindung in Verbindung mit der Zeichnung offensichtlich.

### Kurze Beschreibung der Zeichnungen

Es zeigen:
- Fig. 1: eine erste Ausführungsform einer erfindungsgemässen Umrichterschaltung,
- Fig. 2: eine zweite Ausführungsform einer erfindungsgemässen Umrichterschaltung,
- Fig. 3: eine erste Ausführungsform einer Ansteuerschaltung der erfindungsgemässen Umrichterschaltung nach Fig. 1 oder Fig. 2 und
- Fig. 4: eine zweite Ausführungsform einer Ansteuerschaltung der erfindungsgemässen Umrichterschaltung nach Fig. 1 oder Fig. 2.

Die in der Zeichnung verwendeten Bezugszeichen und deren Bedeutung sind in der Bezugszeichen liste zusammengefasst aufgelistet. Grundsätzlich sind in den Figuren gleiche Teile mit gleichen Bezugszeichen versehen. Die beschriebene Ausführungsform steht beispielhaft für den Erfindungsgegenstand und hat keine beschränkende Wirkung.

### Wege zur Ausführung der Erfindung

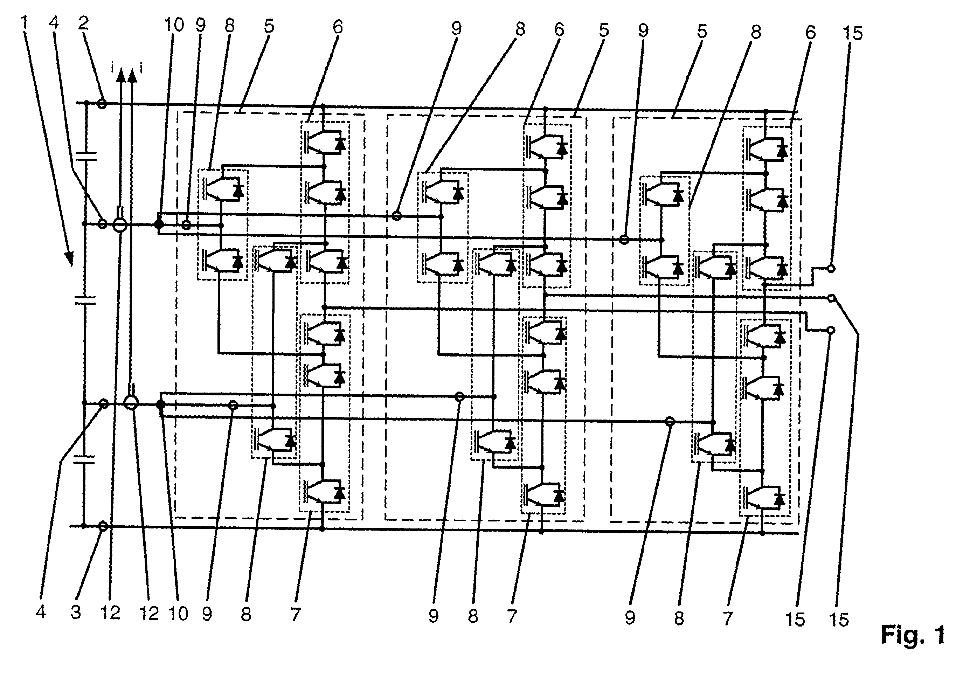

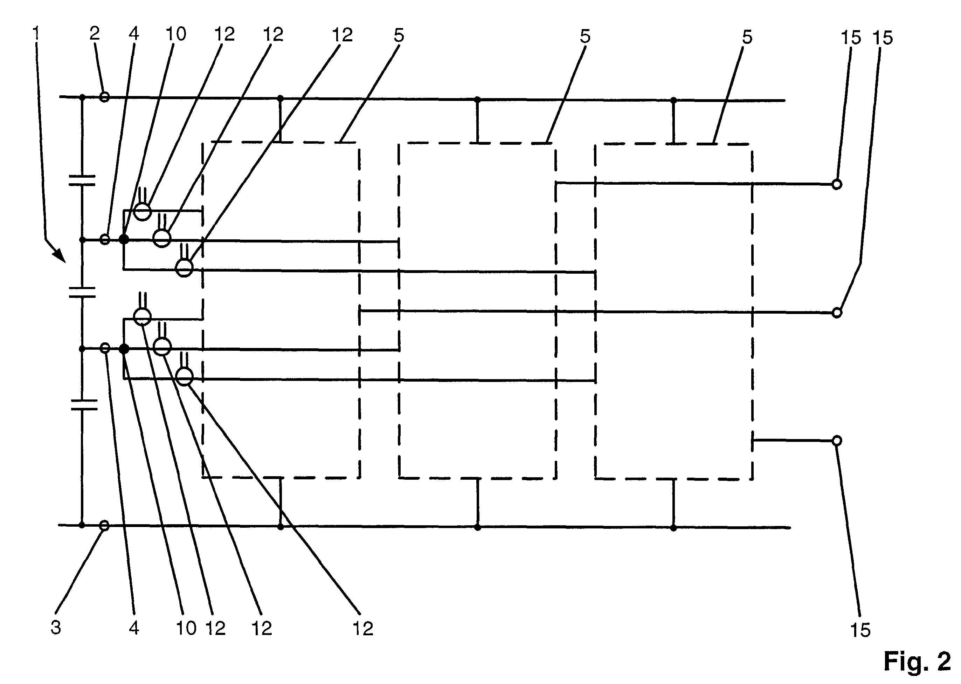

Im folgende werden zunächst zwei alternative Ausführungsformen für eine erfindungsgemässe Umrichterschaltung unter Bezugnahme auf Fig. 1 und Fig. 2 beschrieben. In Fig. 1 ist eine erste Ausführungsform einer erfindungsgemässen Umrichterschaltung dargestellt, wobei diese erste Umrichterschaltung n=4 Spannungsniveaus schalten kann, jedoch allgemein n ≥ 3 ist. Die Umrichterschaltung gemäss Fig. 1 weist einen durch n-1, nämlich einen durch drei in Serie geschalteten Kondensatoren gebildeten Gleichspannungskreis 1 auf, wobei der Gleichspannungskreis 1 einen ersten Hauptanschluss 2 und einen zweiten Hauptanschluss 3 und n-2, d.h. gemäss Fig. 1 zwei, durch jeweils zwei benachbarte und miteinander verbundene Kondensatoren gebildete Teilanschlüsse 4 aufweist. Weiterhin umfasst die Umrichterschaltung mindestens zwei Teilumrichtersysteme 5, die jeweils durch eine erste Schaltgruppe 6 und eine zweite Schaltgruppe 7 mit jeweils n-1, nämlich gemäss Fig. 1 drei, in Serie geschalteten ansteuerbaren bidirektionalen Leistungshalbleiterschaltern und durch n-2, d.h. gemäss Fig. 1 zwei, Klemmschaltgruppen 8 mit jeweils zwei in Serie geschalteten Leistungshalbleiterschaltern gebildet sind. In Fig. 1 sind die ansteuerbaren bidirektionalen Leistungshalbleiterschalter jeweils durch einen Bipolartransistor mit isoliert angeordneter Ansteuerelektrode und einer dazu antiparallel geschalteten Diode ausgebildet. Es versteht sich, dass der Fachmann auch andere ansteuerbare bidirektionale Leistungshalbleiterschalter, wie beispielsweise Abschaltthyristoren oder Leistungs-MOSFETs mit jeweils einer dazu antiparallel geschalteten Diode, verwenden kann.

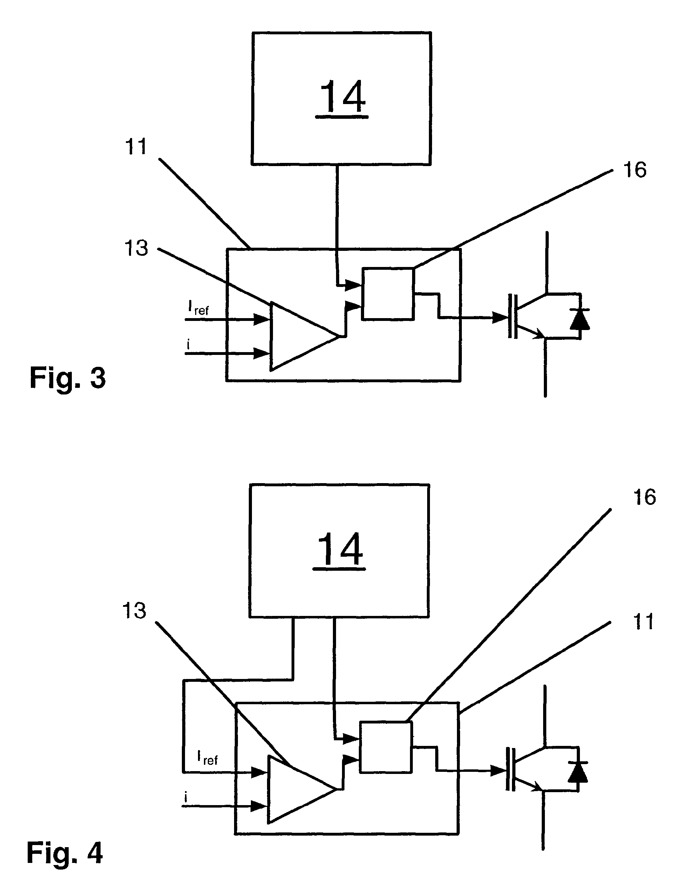

Jede Klemmschaltgruppe 8 eines Teilumrichtersystems 5 ist gemäss Fig. 1 mit der ersten Schaltgruppe 6 und der zweiten Schaltgruppe 7 verbunden, wobei der Verbindungspunkt der Leistungshalbleiterschalter einer jeden Klemmschaltgruppe 8 eines Teilumrichtersystems 5 einen Klemmschaltgruppenanschluss 9 bildet. Desweiteren umfasst die Umrichterschaltung n-2, d.h. gemäss Fig. 1 zwei, Verschaltpunkte 10, wobei jedem Verschaltpunkt 10 jeweils eine Klemmschaltgruppe 8 aus jedem Teilumrichtersystem 5 zugeordnet ist und die zugeordneten Klemmschaltgruppen 8 mit den Klemmschaltgruppenanschlüssen 9 am zugehörigen Verschaltpunkt 10 miteinander verbunden sind. Zudem ist jeder Verschaltpunkt 10 gemäss Fig. 1 mit jeweils einem dem Verschaltpunkt 10 zugeordneten Teilanschluss 4 verbunden. Die Umrichterschaltung umfasst weiterhin eine in Fig. 1 der Übersichtlichkeit halber nicht dargestellte Ansteuerschaltung 11, die mit den ansteuerbaren bidirektionalen Leistungshalbleiterschaltern der ersten Schaltgruppen 6 und zweiten Schaltgruppen 7 der Teilumrichtersysteme 5 verbunden ist. Eine erste beziehungsweise eine zweite Ausführungsform der Ansteuerschaltung 11 der erfindungsgemässen Umrichterschaltung nach Fig. 1 ist in Fig. 3 beziehungsweise in Fig. 4 gezeigt, wobei auf deren detaillierte Beschreibung später folgend näher eingegangen wird.

Gemäss Fig. 1 ist zwischen jedem Verschaltpunkt 10 und dem zugeordneten Teilanschluss 4 erfindungsgemäss ein Stromsensor 12 eingeschaltet, wobei jeder Stromsensor 12 mit einer Stromüberwachungseinrichtung 13 der Ansteuerschaltung 11 verbunden ist. Mittels der vorstehend beschriebenen Anordnung des Stromsensors 12 kann auf eine aus dem Stand der Technik bekannte und für jeden ansteuerbaren bidirektionalen Leistungshalbleiterschalter vorgesehene Überwachungseinrichtung vorteilhaft verzichtet werden. Daraus resultiert ferner, dass die gängige Signalführung der Rückmeldesignale einer jeden gängigen Überwachungseinrichtung zur Ansteuerschaltung 11, beispielsweise durch Leitungen oder Lichtwellenleiter entfallen. Die erfindungsgemässe Umrichterschaltung nach Fig. 1 kann dadurch gegenüber dem Stand der Technik markant vereinfacht werden und weist zudem einen sehr geringen Platzbedarf auf, so dass sich die erfindungsgemässe Umrichterschaltung insgesamt besonders kostengünstig realisieren lässt. Darüber hinaus resultiert aus dieser Vereinfachung ein unkomplizierter Aufbau der erfindungsgemässen Umrichterschaltung, die zudem robust und wenig störungsanfällig ist, so dass vorteilhaft ein auftretender Überstrom der Umrichterschaltung, beispielsweise hervorgerufen durch einen Kurzschluss in einem Hauptstrompfad eines ansteuerbaren bidirektionalen Leistungshalbleiterschalters, problemlos und schnell detektiert werden kann, der dann auf besonders einfache und schnelle Weise abgeschalten werden kann, so dass die Umrichterschaltung durch den Überstrom nicht beschädigt oder gar zerstört wird.

Alternativ zu dem zwischen jedem Verschaltpunkt 10 und dem zugeordneten Teilanschluss 4 eingeschalteten Stromsensor 12 der ersten Ausführungsform der erfindungsgemässen Umrichterschaltung nach Fig. 1 ist bei einer zweiten Ausführungsform der erfindungsgemässen Umrichterschaltung gemäss Fig. 2 zwischen jedem Klemmschaltgruppenanschluss 9 und dem zugehörigen Verschaltpunkt 10 ein Stromsensor 12 eingeschaltet. Jeder Stromsensor 12 ist dabei erfindungsgemäss mit der Stromüberwachungseinrichtung 13 der in Fig. 2, ebenfalls wie in Fig. 1, der Übersichtlichkeit halber nicht dargestellten Ansteuerschaltung 11 verbunden. Wie vorstehend bereits erwähnt, ist eine erste beziehungsweise eine zweite Ausführungsform der Ansteuerschaltung 11 der erfindungsgemässen Umrichterschaltung nach Fig. 1 in Fig. 3 beziehungsweise in Fig. 4 gezeigt, wobei auf deren detaillierte Beschreibung später folgend näher eingegangen wird.

Neben den vorstehend bezüglich der ersten Ausführungsform der erfindungsgemässen Umrichterschaltung nach Fig. 1 genannten Vorteilen kann durch die zweite Ausführungsform der erfindungsgemässen Umrichterschaltung nach Fig. 2 ein auftretender Überstrom in einem Teilumrichtersystem 5 der Umrichterschaltung problemlos und schnell detektiert werden, wobei der Überstrom durch selektives Abschalten des betroffenen Teilumrichtersystems 5 dann auf besonders einfache und schnelle Weise abgeschalten werden kann, ohne dass das betroffenen Teilumrichtersystem 5 und die gesamte Umrichterschaltung durch den Überstrombeschädigt oder gar zerstört wird. Der fortlaufende Normalbetrieb der von dem Überstrom nicht betroffenen Teilumrichtersysteme 5 und damit der Umrichterschaltung ist somit vorteilhaft ermöglicht, wodurch die erfindungsgemässe Umrichterschaltung auch bei Auftreten eines Überstromes in einem Teilumrichtersystem 5 eine besonders hohe Verfügbarkeit aufweist.

Vorzugsweise entspricht bei der erfindungsgemässen Umrichterschaltung nach Fig. 1 beziehungsweise nach Fig. 2 die Anzahl der Teilumrichtersysteme 5 der Zahl an die Umrichterschaltung anschliessbarer Wechselspannungsphasen, wobei jedes Teilumrichtersystem 5 einen Wechselspannungsanschluss 15 aufweist. Im Falle der Umrichterschaltung gemäss Fig. 1 beziehungsweise gemäss Fig. 2 sind an die Umrichterschaltung drei Wechselspannungsphasen anschliessbar, so dass die Umrichterschaltung drei Teilumrichtersysteme 5 aufweist. Die erfindungsgemässe Umrichterschaltung gemäss Fig. 1 beziehungsweise gemäss Fig. 2 weist somit ein hohes Mass an Modularität auf, so dass sich ohne grossen Aufwand eine nahezu beliebige Anzahl an Wechselspannungsphasen an die Umrichterschaltung anschliessen lassen.

Weiterhin sind die Leistungshalbleiterschalter der Klemmschaltgruppen 8 der erfindungsgemässen Umrichterschaltung gemäss Fig. 1 beziehungsweise gemäss Fig. 2 vorzugsweise als ansteuerbare bidirektionale Leistungshalbleiterschalter ausgeführt. Mittels solch ausgebildeter Leistungshalbleiterschalter lassen sich mögliche Überströme in den Klemmschaltgruppen 8 durch Abschaltung der Umrichterschaltung nach Fig. 1 oder durch selektives Abschalten des betroffenen Teilumrichtersystems 5 der Umrichterschaltung nach Fig. 2 einfach und schnell abschalten, so dass damit die Umrichterschaltung, insbesondere die ansteuerbaren bidirektionalen Leistungshalbleiterschalter der Klemmschaltgruppen 8 vor Beschädigung oder gar Zerstörung weitestgehend geschützt werden können.

Im folgenden wird nun detailliert auf die Ansteuerschaltung 11 der erfindungsgemässen Umrichterschaltung eingegangen, wobei die Ansteuerschaltung anhand der ersten Ausführungsform nach Fig. 3 und der zweiten Ausführungsform nach Fig. 4 erläutert wird. Die Ansteuerschaltung gemäss Fig. 3 weist die bereits beschriebene Stromüberwachungseinrichtung 13 auf, wobei allgemein für jeden Stromsensor 12 eine solche Stromüberwachungseinrichtung 13 vorgesehen ist, d.h. für die erste Ausführungsform der erfindungsgemässen Umrichterschaltung nach Fig. 1 sind zwei Stromüberwachungseinrichtungen 13 und für die zweite Ausführungsform der erfindungsgemässen Umrichterschaltung nach Fig. 2 sind sechs Stromüberwachungseinrichtungen 13 vorgesehen, wobei in Fig. 3 der Übersichtlichkeit halber nur eine Stromüberwachungseinrichtungen 13 dargestellt ist. Jede Stromüberwachungseinrichtung 13 ist zudem mit ihrem Eingang mit jeweils einem Stromsensor 12 verbunden. Jeder Stromüberwachungseinrichtung 13 ist weiterhin ein Stromreferenzwert I_{ref} zugeführt. In der ersten Ausführungsform der Ansteuerschaltung nach Fig. 3 ist der Stromreferenzwert I_{ref} manuell vorgegeben. Diese manuelle Vorgabe kann bei der Inbetriebsetzung der Umrichterschaltung oder später beispielsweise durch entsprechendes Bedienpersonal der Umrichterschaltung erfolgen, so dass der Stromreferenzwert I_{ref} mit Vorteil individuell an die Anforderungen der Umrichterschaltung angepasst werden kann.

Auch bei der zweiten Ausführungsform der Ansteuerschaltung nach Fig. 4 sind für die erste Ausführungsform der erfindungsgemässen Umrichterschaltung nach Fig. 1 zwei Stromüberwachungseinrichtungen 13 und sechs Stromüberwachungseinrichtungen 13 für die zweite Ausführungsform der erfindungsgemässen Umrichterschaltung nach Fig. 2 vorgesehen, wobei in Fig. 4 der Übersichtlichkeit halber nur eine Stromüberwachungseinrichtung 13 dargestellt ist. Darüber hinaus ist in der zweiten Ausführungsform der Ansteuerschaltung nach Fig. 4 jede Stromüberwachungseinrichtung 13 ebenfalls mit ihrem Eingang mit jeweils einem Stromsensor 12 verbunden, wobei jeder Stromüberwachungseinrichtung 13 ein Stromreferenzwert I_{ref} zugeführt ist. Der Stromreferenzwert I_{ref} ist vorzugsweise von einer mit der Stromüberwachungseinrichtung 13 verbundenen Umrichterregeleinrichtung 14 berechnet. Diese Berechnung des Stromreferenzwertes I_{ref} erfolgt aus an den Wechselspannungsanschlüssen 15 gemessenen Strömen und den Schaltzuständen der ansteuerbare bidirektionale Leistungshalbleiterschalter, wodurch vorteilhafterweise eine niedrigere Detektionsschwelle der Stromüberwachungseinrichtungen 13 erzielt werden kann und damit ein schnelles und sicheres Abschalten eines auftretenden Überstromes der Umrichterschaltung erreicht werden kann.

Gemäss Fig. 3 und Fig. 4 weist die Ansteuerschaltung 11 weiterhin je eine Treiberschaltung 16 für jeden ansteuerbaren bidirektionalen Leistungshalbleiterschalter auf, wobei in Fig. 3 sowie in Fig. 4 der Übersichtlichkeit halber nur eine Treiberschaltung 16 dargestellt ist. Jede Treiberschaltung 16 ist ausgangsseitig mit der Ansteuerelektrode des zugehörigen ansteuerbaren bidirektionalen Leistungshalbleiterschalters verbunden. Jede Treiberschaltung 16 ist ferner eingangsseitig mit den Ausgängen sämtlicher Stromüberwachungseinrichtungen 13 verbunden, wobei bei der Ansteuerschaltung 11 gemäss Fig. 3 beziehungsweise gemäss Fig. 4 für die Umrichterschaltung nach Fig. 2 jede Stromüberwachungseinrichtung 13 jeweils einem Teilumrichtersystem 5 zugeordnet ist. Zudem ist jede Treiberschaltung 16 eingangsseitig mit der Umrichterregeleinrichtung 14 verbunden. Insgesamt ist die Ansteuerschaltung 11 nach Fig. 3 und Fig. 4 somit sehr einfach aufgebaut und damit sehr robust und wenig störanfällig. Auf die Funktionsweise der Ansteuerschaltung 11 wird nachfolgend bei der Beschreibung des erfindungsgemässen Verfahrens zum Betrieb der Umrichterschaltung nach der ersten Ausführungsform gemäss Fig. 1 und nach der zweiten Ausführungsform gemäss Fig. 2 näher eingegangen.

Beim erfindungsgemässen Verfahren zum Betrieb der Umrichterschaltung nach der ersten Ausführungsform gemäss Fig. 1 werden die ansteuerbaren bidirektionalen Leistungshalbleiterschalter der ersten Schaltgruppen 6 und der zweiten Schaltgruppen 7 mittels der mit den ansteuerbaren bidirektionalen Leistungshalbleiterschaltern verbundenen Ansteuerschaltung 11 gemäss der Ausführungsform nach Fig. 3 beziehungsweise Fig. 4 angesteuert werden. Im Normalbetrieb gibt dabei die Umrichterregeleinrichtung 14 den Treiberschaltungen 16 Ansteuersignale vor, die dann in den Treiberschaltungen 16 in Schaltsignale für die angeschlossenen ansteuerbaren bidirektionalen Leistungshalbleiterschalter umgesetzt werden und diese somit angesteuert werden.

Erfindungsgemäss wird bei der Umrichterschaltung nach der ersten Ausführungsform gemäss Fig. 1 ein zwischen jeweils einem Verschaltpunkt 10 und dem zugeordneten Teilanschluss 4 fliessender Strom i mittels des zwischen dem Verschaltpunkt 10 und dem zugeordneten Teilanschluss 4 eingeschalteten Stromsensors 12 gemessen. Der Strom i eines jeden Stromsensors 12 wird dann der zugehörigen Stromüberwachungseinrichtung 13 der Ansteuerschaltung 11 zugeführt und auf den der Stromüberwachungseinrichtung 13 zugeführten Stromreferenzwert I_{ref} hin überwacht. Falls der Strom i den Stromreferenzwert I_{ref} überschreitet, werden die ansteuerbaren bidirektionalen Leistungshalbleiterschalter der ersten Schaltgruppe 6 und zweiten Schaltgruppe 7 eines jeden Teilumrichtersystems 5 derart angesteuert, dass die Umrichterschaltung abgeschaltet wird. Zunächst wird bei Überschreiten des Stromreferenzwertes I_{ref} in einer oder mehreren Stromüberwachungseinrichtungen 13 ein Überschreitungssignal von der oder den entsprechenden Stromüberwachungseinrichtungen 13 an sämtliche Treiberschaltungen 16 ausgegeben, wobei die Ansteuersignale der Umrichterregeleinrichtung 14 in diesem Fall blockiert sind. Für die Umrichterschaltung gemäss Fig. 1 geben dann die Treiberschaltungen 16 auf die Ansteuersignale hin entsprechende Schaltsignale an die angeschlossenen ansteuerbaren bidirektionalen Leistungshalbleiterschalter, so dass sämtliche ansteuerbaren bidirektionalen Leistungshalbleiterschalter und damit die gesamte Umrichterschaltung abgeschaltet wird. Somit ist vorteilhaft eine schnelle und problemlose Detektion eines auftretenden Überstromes der Umrichterschaltung ermöglicht, der dann durch Abschalten der Umrichterschaltung einfach schnell abgeschaltet wird, wobei bei der Detektion und der Abschaltung keine Überwachung der Hauptstrompfade der ansteuerbaren bidirektionalen Leistungshalbleiterschalter der Umrichterschaltung benötigt wird. Darüber hinaus können die ansteuerbaren bidirektionalen Leistungshalbleiterschalter und damit die erfindungsgemässe Umrichterschaltung nach Fig. 1 selbst durch das erfindungsgemässe Verfahren effektiv vor Zerstörung durch den Überstrom geschützt werden.

Bei den vorzugsweise als ansteuerbare bidirektionale Leistungshalbleiterschalter ausgeführten Leistungshalbleiterschaltern der Klemmschaltgruppen 8 der erfindungsgemässen Umrichterschaltung gemäss Fig. 1 werden, falls der Strom i den Stromreferenzwert I_{ref} überschreitet, die Leistungshalbleiterschalter der Klemmschaltgruppen 8 eines jeden Teilumrichtersystems 5 derart angesteuert, dass die Umrichterschaltung abgeschaltet wird. Dabei wird, wie vorstehend allgemein beschrieben, auch für die ansteuerbaren bidirektionalen Leistungshalbleiterschalter der Klemmschaltgruppen 8 zunächst bei Überschreiten des Stromreferenzwertes I_{ref} in einer oder mehreren Stromüberwachungseinrichtungen 13 das Überschreitungssignal von der oder den entsprechenden Stromüberwachungseinrichtungen 13 an sämtliche Treiberschaltungen 16 ausgegeben, wobei die Ansteuersignale der Umrichterregeleinrichtung 14 in diesem Fall blockiert sind. Für die Umrichterschaltung gemäss Fig. 1 geben dann die Treiberschaltungen 16 auf die Ansteuersignale hin entsprechende Schaltsignale auch an die angeschlossenen ansteuerbaren bidirektionalen Leistungshalbleiterschalter der Klemmschaltgruppen 8, so dass sämtliche ansteuerbaren bidirektionalen Leistungshalbleiterschalter und damit die gesamte Umrichterschaltung abgeschaltet wird. Neben den vorstehend genannten Vorteilen für die Umrichterschaltung nach Fig. 1 lassen sich zudem mögliche Überströme in den Klemmschaltgruppen 8 durch Abschaltung der Umrichterschaltung nach Fig. 1 einfach und schnell abschalten, so dass damit die Umrichterschaltung, insbesondere auch die ansteuerbaren bidirektionalen Leistungshalbleiterschalter der Klemmschaltgruppen 8 vor Beschädigung oder gar Zerstörung zusätzlich weitestgehend geschützt werden können.

Alternativ zum Verfahren zum Betrieb der erfindungsgemässen Umrichterschaltung nach der ersten Ausführungsform gemäss Fig. 1 wird beim erfindungsgemässen Verfahren zum Betrieb der erfindungsgemässen Umrichterschaltung nach der zweiten Ausführungsform gemäss Fig. 2 ein in jeweils ein Teilumrichtersystem 5 fliessender Strom i mittels des zwischen dem Klemmschaltgruppenanschluss 9 und dem zugehörigen Verschaltpunkt 10 eingeschalteten Stromsensors 12 gemessen. Der Strom i eines jeden Stromsensors 12 wird dann der zugehörigen Stromüberwachungseinrichtung 13 der Ansteuerschaltung 11 zugeführt und auf den der Stromüberwachungseinrichtung 13 zugeführten Stromreferenzwert I_{ref} hin überwacht. Falls der Strom i den Stromreferenzwert I_{ref} überschreitet, werden die ansteuerbaren bidirektionalen Leistungshalbleiterschalter der ersten Schaltgruppe 6 und zweiten Schaltgruppe 7 des zugehörigen Teilumrichtersystems 5 derart angesteuert, dass das Teilumrichtersystem 5 abgeschaltet wird. Zunächst wird bei Überschreiten des Stromreferenzwertes I_{ref} in einer oder mehreren Stromüberwachungseinrichtungen 13 ein Überschreitungssignal von der oder den entsprechenden Stromüberwachungseinrichtungen 13 an sämtliche Treiberschaltungen 16 ausgegeben, wobei die Ansteuersignale der Umrichterregeleinrichtung 14 in diesem Fall blockiert sind. Wie bereits bei der Beschreibung der Ansteuerschaltung 11 gemäss Fig. 3 beziehungsweise gemäss Fig. 4 erwähnt, ist für die Umrichterschaltung nach Fig. 2 jede Stromüberwachungseinrichtung 13 der Ansteuerschaltung 11 nach Fig. 3 und Fig. 4 jeweils einem Teilumrichtersystem 5 zugeordnet, so dass für die Umrichterschaltung gemäss Fig. 2 dann nur die Treiberschaltungen 16 des Teilumrichtersystems 5 auf die Ansteuersignale hin entsprechende Schaltsignale zur Abschaltung an die angeschlossenen ansteuerbaren bidirektionalen Leistungshalbleiterschalter geben, welche von den diesem Teilumrichtersystem 5 zugeordneten Stromüberwachungseinrichtungen 13 ein Überschreitungssignal erhalten. Dadurch wird schliesslich vorteilhaft erreicht, dass sämtliche ansteuerbaren bidirektionalen Leistungshalbleiterschalter dieses Teilumrichtersystems 5 und damit das vom Überstrom betroffene Teilumrichtersystem 5 selbst abgeschaltet wird. Neben den vorstehend bezüglich des Verfahrens zum Betrieb der erfindungsgemässen Umrichterschaltung gemäss Fig. 1 genannten Vorteilen ermöglicht das erfindungsgemässe Verfahren zum Betrieb der erfindungsgemässen Umrichterschaltung gemäss Fig. 2 eine schnelle und einfache Detektion eines auftretenden Überstromes in einem Teilumrichtersystem 5 der Umrichterschaltung, der dann schnell und problemlos durch selektives Abschalten des entsprechenden Teilumrichtersystems 5 abgeschaltet wird. Desweiteren kann das betroffene Teilumrichtersystem 5 durch dessen Abschaltung effektiv vor Zerstörung durch den Überstrom geschützt werden. Das erfindungsgemässe Verfahren zum Betrieb der Umrichterschaltung gemäss Fig. 2 ermöglicht zudem den weiteren Normalbetrieb der von dem Überstrom nicht betroffenen Teilumrichtersysteme und damit der Umrichterschaltung, da im Unterschied zum Verfahren zum Betrieb der Umrichterschaltung nach Fig. 1 nicht die ansteuerbaren bidirektionalen Leistungshalbleiterschalter der ersten Schaltgruppe 6 und zweiten Schaltgruppe 7 eines jeden Teilumrichtersystems 5 derart angesteuert werden, dass sämtliche Teilstromrichtersysteme 5 und damit die ganze Umrichterschaltung abgeschaltet wird.

Bei den vorzugsweise als ansteuerbare bidirektionale Leistungshalbleiterschalter ausgeführten Leistungshalbleiterschaltern der Klemmschaltgruppen 8 der erfindungsgemässen Umrichterschaltung gemäss Fig. 2 werden, falls der Strom i den Stromreferenzwert I_{ref} überschreitet, die als ansteuerbare bidirektionale Leistungshalbleiterschalter ausgeführten Leistungshalbleiterschalter der Klemmschaltgruppen 8 des zugehörigen Teilumrichtersystems 5 derart angesteuert, dass das Teilumrichtersystem 5 abgeschaltet wird. Dabei wird, wie vorstehend allgemein beschrieben, auch für die ansteuerbaren bidirektionalen Leistungshalbleiterschalter der Klemmschaltgruppen 8 zunächst bei Überschreiten des Stromreferenzwertes I_{ref} in einer oder mehreren Stromüberwachungseinrichtungen 13 ein Überschreitungssignal von der oder den entsprechenden Stromüberwachungseinrichtungen 13 an sämtliche Treiberschaltungen 16 ausgegeben, wobei die Ansteuersignale der Umrichterregeleinrichtung 14 in diesem Fall blockiert sind. Da, wie bei der Beschreibung der Ansteuerschaltung 11 gemäss Fig. 3 beziehungsweise gemäss Fig. 4 erwähnt, für die Umrichterschaltung nach Fig. 2 jede Stromüberwachungseinrichtung 13 der Ansteuerschaltung 11 nach Fig. 3 beziehungsweise Fig. 4 jeweils einem Teilumrichtersystem 5 zugeordnet ist, geben dann auch nur die Treiberschaltungen 16 des Teilumrichtersystems 5 auf die Ansteuersignale hin entsprechende Schaltsignale zur Abschaltung an die angeschlossenen ansteuerbaren bidirektionalen Leistungshalbleiterschalter der Klemmschaltgruppen 8, welche von den diesem Teilumrichtersystem 5 zugeordneten Stromüberwachungseinrichtungen 13 ein Überschreitungssignal erhalten. Dadurch wird vorteilhaft erzielt, dass neben den ansteuerbaren bidirektionalen Leistungshalbleiterschaltern der ersten und zweiten Schaltgruppe 6, 7 dieses Teilumrichtersystems 5 zusätzlich die ansteuerbaren bidirektionalen Leistungshalbleiterschalter der Klemmschaltgruppen 8 dieses Teilumrichtersystems 5 und damit das vom Überstrom betroffene Teilumrichtersystem 5 selbst abgeschaltet wird. Es versteht sich, dass auch in diesem Fall der weitere Normalbetrieb der von dem Überstrom nicht betroffenen Teilumrichtersysteme und damit der Umrichterschaltung vorteilhaft ermöglicht ist.

Darüber hinaus wird, wie bereits bei der Beschreibung der erfindungsgemässen Umrichterschaltung nach Fig. 1 und Fig. 2 im Zusammenhang mit der Ansteuerschaltung 11 gemäss Fig. 3 beziehungsweise Fig. 4 eingehend erläutert, der Stromreferenzwert I_{ref} manuell vorgegeben oder alternativ von einer Umrichterregeleinrichtung 14 berechnet.

Es versteht sich, dass die erfindungsgemässe Umrichterschaltung nach den Ausführungsformen gemäss Fig. 1 und Fig. 2 nicht auf Realisierungen dieser Ausführungsformen beschränkt ist. Eine beliebige Kombination der Ausführungsformen gemäss Fig. 1 und Fig.2 ist demnach möglich.

Insgesamt stellt die erfindungsgemässe Umrichterschaltung eine unkomplizierte, robuste und wenig störungsanfällige Lösung dar. Mit dem erfindungsgemässen Verfahren zum Betrieb einer solchen Umrichterschaltung ist weiterhin eine Lösung aufgezeigt, welche eine einfache, störungsunempfindliche und schnelle Abschaltung eines Überstromes der Umrichterschaltung ohne eine Überwachung der Hauptstrompfade der ansteuerbarer bidirektionaler Leistungshalbleiterschalter der Umrichterschaltung zulässt.

### Bezugszeichenliste

- 1: Gleichspannungskreis
- 2: erster Hauptanschluss
- 3: zweiter Hauptanschluss
- 4: Teilanschluss
- 5: Teilumrichtersystem
- 6: erste Schaltgruppe
- 7: zweite Schaltgruppe
- 8: Klemmschaltgruppe
- 9: Klemmschaltgruppenanschluss
- 10: Verschaltpunkt
- 11: Ansteuerschaltung
- 12: Stromsensor
- 13: Stromüberwachungseinrichtung
- 14: Umrichterregeleinrichtung
- 15: Wechselspannungsanschluss
- 16: Treiberschaltung

## Patentansprüche

1. Umrichterschaltung zur Schaltung von n Spannungsniveaus, wobei n ≥ 3 ist, mit einem durch n-1 in Serie geschalteten Kondensatoren gebildeten Gleichspannungskreis (1 ), wobei der Gleichspannungskreis (1 ) einen ersten Hauptanschluss (2) und einen zweiten Hauptanschluss (3) und n-2 durch jeweils zwei benachbarte und miteinander verbundene Kondensatoren gebildete Teilanschlüsse (4) aufweist, und mit mindestens zwei Teilumrichtersystemen (5), die jeweils durch eine erste Schaltgruppe (6) und eine zweite Schaltgruppe (7) mit jeweils n-1 in Serie geschalteten ansteuerbaren bidirektionalen Leistungshalbleiterschaltern und durch n-2 Klemmschaltgruppen (8) mit jeweils zwei in Serie geschalteten Leistungshalbleiterschaltern gebildet sind, wobei jede Klemmschaltgruppe (8) eines Teilumrichtersystems (5) mit der ersten Schaltgruppe (6) und der zweiten Schaltgruppe (7) verbunden ist und der Verbindungspunkt der Leistungshalbleiterschalter einer jeden Klemmschaltgruppe (8) eines Teilumrichtersystems (5) einen Klemmschaltgruppenanschluss (9) bildet, und mit n-2 Verschaltpunkten (10), wobei jedem Verschaltpunkt (10) jeweils eine Klemmschaltgruppe (8) aus jedem Teilumrichtersystem (5) zugeordnet ist und die zugeordneten Klemmschaltgruppen (8) mit den Klemmschaltgruppenanschlüssen (9) am zugehörigen Verschaltpunkt (10) miteinander verbunden sind, und wobei jeder Verschaltpunkt (10) mit jeweils einem dem Verschaltpunkt (10) zugeordneten Teilanschluss (4) verbunden ist, und mit einer mit den ansteuerbaren bidirektionalen Leistungshalbleiterschaltern der ersten Schaltgruppen (6) und
zweiten Schaltgruppen (7) verbundenen Ansteuerschaltung (11 ), **dadurch gekennzeichnet,**
**dass** zwischen jedem Verschaltpunkt (10) und dem zugeordneten Teilanschluss (4) ein Stromsensor (12) eingeschaltet ist, und
**dass** jeder Stromsensor (12) mit einer Stromüberwachungseinrichtung (13) der Ansteuerschaltung (11) verbunden ist.

2. Umrichterschaltung zur Schaltung von n Spannungsniveaus, wobei n ≥ 3 ist, mit einem durch n-1 in Serie geschalteten Kondensatoren gebildeten Gleichspannungskreis (1), wobei der Gleichspannungskreis (1 ) einen ersten Hauptanschluss (2) und einen zweiten Hauptanschluss (3) und n-2 durch jeweils zwei benachbarte und miteinander verbundene Kondensatoren gebildete Teilanschlüsse (4) aufweist, und mit mindestens zwei Teilumrichtersystemen (5), die jeweils durch eine erste Schaltgruppe (6) und eine zweite Schaltgruppe (7) mit jeweils n-1 in Serie geschalteten ansteuerbaren bidirektionalen Leistungshalbleiterschaltern und durch n-2 Klemmschaltgruppen (8) mit jeweils zwei in Serie geschalteten Leistungshalbleiterschaltern gebildet sind, wobei jede Klemmschaltgruppe (8) eines Teilumrichtersystems (5) mit der ersten Schaltgruppe (6) und der zweiten Schaltgruppe (7) verbunden ist und der Verbindungspunkt der Leistungshalbleiterschalter einer jeden Klemmschaltgruppe (8) eines Teilumrichtersystems (5) einen Klemmschaltgruppenanschluss (9) bildet, und mit n-2 Verschaltpunkten (10), wobei jedem Verschaltpunkt (10) jeweils eine Klemmschaltgruppe (8) aus jedem Teilumrichtersystem (5) zugeordnet ist und die zugeordneten Klemmschaltgruppen (8) mit den Klemmschaltgruppenanschlüssen (9) am zugehörigen Verschaltpunkt (10) miteinander verbunden sind, und wobei jeder Verschaltpunkt (10) mit jeweils einem dem Verschaltpunkt (10) zugeordneten Teilanschluss (4) verbunden ist, und mit einer mit den ansteuerbaren bidirektionalen Leistungshalbleiterschaltern der ersten Schaltgruppen (6) und
zweiten Schaltgruppen (7) verbundenen Ansteuerschaltung (11 ), **dadurch gekennzeichnet,**
**dass** zwischen jedem Klemmschaltgruppenanschluss (9) und dem zugehörigen Verschaltpunkt (10) ein Stromsensor (12) eingeschaltet ist, und
**dass** jeder Stromsensor (12) mit einer Stromüberwachungseinrichtung (13) der Ansteuerschaltung (11 ) verbunden ist.

3. Umrichterschaltung nach Anspruch 1 oder 2, **dadurch gekennzeichnet, dass** für jeden Stromsensor (12) eine Stromüberwachungseinrichtung (13) vorgesehen ist.

4. Umrichterschaltung nach Anspruch 3, **dadurch gekennzeichnet, dass** jeder Stromüberwachungseinrichtung (13) ein Stromreferenzwert (I_{ref}) zugeführt ist.

5. Umrichterschaltung nach Anspruch 4, **dadurch gekennzeichnet, dass** Stromreferenzwert (I_{ref}) manuell vorgegeben ist.

6. Umrichterschaltung nach Anspruch 4, **dadurch gekennzeichnet, dass** Stromreferenzwert (I_{ref}) von einer mit der Stromüberwachungseinrichtung (13) verbundenen Umrichterregeleinrichtung (14) berechnet ist.

7. Umrichterschaltung nach einem der vorhergehenden Ansprüche, **dadurch gekennzeichnet, dass** die Anzahl der Teilumrichtersysteme (5) der Zahl an die Umrichterschaltung anschliessbarer Wechselspannungsphasen entspricht, wobei jedes Teilumrichtersystem (5) einen Wechselspannungsanschluss (15) aufweist.

8. Umrichterschaltung nach einem der vorhergehenden Ansprüche, **dadurch gekennzeichnet, dass** die Leistungshalbleiterschalter der Klemmschaltgruppen (8) als ansteuerbare bidirektionale Leistungshalbleiterschalter ausgeführt sind.

9. Verfahren zum Betrieb einer Umrichterschaltung zur Schaltung von n Spannungsniveaus, wobei n ≥ 3 ist, bei dem die Umrichterschaltung umfasst
- einen durch n-1 in Serie geschaltete Kondensatoren gebildeten Gleichspannungskreis (1 ) aufweist, wobei der Gleichspannungskreis (1 ) einen ersten Hauptanschluss (2) und einen zweiten Hauptanschluss (3) und n-2 durch jeweils zwei benachbarte und miteinander verbundene Kondensatoren gebildete Teilanschlüsse (4) umfasst,
- mindestens zwei Teilumrichtersystemen (5) aufweist, die jeweils durch eine erste Schaltgruppe (6) und eine zweite Schaltgruppe (7) mit jeweils n-1 in Serie geschalteten ansteuerbaren bidirektionalen Leistungshalbleiterschaltern und durch n-2 Klemmschaltgruppen (8) mit jeweils zwei in Serie geschalteten Leistungshalbleiterschaltern geschalteten gebildet sind, wobei jede Klemmschaltgruppe (8) eines Teilumrichtersystems (5) mit der ersten Schaltgruppe (6) und der zweiten Schaltgruppe (7) verbunden ist und der Verbindungspunkt der Leistungshalbleiterschalter einer jeden Klemmschaltgruppe (8) eines Teilumrichtersystems (5) einen Klemmschaltgruppenanschluss (9) bildet,
- n-2 Verschaltpunkte (10), wobei jedem Verschaltpunkt (10) jeweils eine Klemmschaltgruppe (8) aus jedem Teilumrichtersystem (5) zugeordnet ist und die zugeordneten Klemmschaltgruppen (8) mit den Klemmschaltgruppenanschlüssen (9) am zugehörigen Verschaltpunkt (10) miteinander verbunden sind, und wobei jeder Verschaltpunkt (10) mit jeweils einem dem Verschaltpunkt (10) zugeordneten Teilanschluss (4) verbunden ist,
und
bei dem die ansteuerbaren bidirektionalen Leistungshalbleiterschalter der ersten Schaltgruppen (6) und zweiten Schaltgruppen (7) mittels einer mit den ansteuerbaren bidirektionalen Leistungshalbleiterschaltern verbundenen Ansteuerschaltung (11 ) angesteuert werden, **dadurch gekennzeichnet,**
**dass** ein zwischen jeweils einem Verschaltpunkt (10) und dem zugeordneten Teilanschluss (4) fliessender Strom (i) mittels eines zwischen dem Verschaltpunkt (10) und
dem zugeordneten Teilanschluss (4) eingeschalteten Stromsensors (12) gemessen wird, dass der Strom (i) einer Stromüberwachungseinrichtung (13) der Ansteuerschaltung (11 ) zugeführt wird und auf einen der Stromüberwachungseinrichtung (13) zugeführten Stromreferenzwert (I_{ref}) hin überwacht wird, und dass falls der Strom (i) den Stromreferenzwert (I_{ref}) überschreitet die ansteuerbaren bidirektionalen Leistungshalbleiterschalter der ersten Schaltgruppe (6) und zweiten Schaltgruppe (7) eines jeden Teilumrichtersystems (5) derart angesteuert werden, dass die Umrichterschaltung abgeschaltet wird.

10. Verfahren zum Betrieb einer Umrichterschaltung zur Schaltung von n Spannungsniveaus, wobei n ≥ 3 ist, bei dem die Umrichterschaltung umfasst
- einen durch n-1 in Serie geschaltete Kondensatoren gebildeten Gleichspannungskreis (1) aufweist, wobei der Gleichspannungskreis (1) einen ersten Hauptanschluss (2) und einen zweiten Hauptanschluss (3) und n-2 durch jeweils zwei benachbarte und miteinander verbundene Kondensatoren gebildete Teilanschlüsse (4) umfasst,
- mindestens zwei Teilumrichtersystemen (5) aufweist, die jeweils durch eine erste Schaltgruppe (6) und eine zweite Schaltgruppe (7) mit jeweils n-1 in Serie geschalteten ansteuerbaren bidirektionalen Leistungshalbleiterschaltern und durch n-2 Klemmschaltgruppen (8) mit jeweils zwei in Serie geschalteten Leistungshalbleiterschaltern geschalteten gebildet sind, wobei jede Klemmschaltgruppe (8) eines Teilumrichtersystems (5) mit der ersten Schaltgruppe (6) und der zweiten Schaltgruppe (7) verbunden ist und der Verbindungspunkt der Leistungshalbleiterschalter einer jeden Klemmschaltgruppe (8) eines Teilumrichtersystems (5) einen Klemmschaltgruppenanschluss (9) bildet,
- n-2 Verschaltpunkte (10), wobei jedem Verschaltpunkt (10) jeweils eine Klemmschaltgruppe (8) aus jedem Teilumrichtersystem (5) zugeordnet ist und die zugeordneten Klemmschaltgruppen (8) mit den Klemmschaltgruppenanschlüssen (9) am zugehörigen Verschaltpunkt (10) miteinander verbunden sind, und wobei jeder Verschaltpunkt
(10) mit jeweils einem dem Verschaltpunkt (10) zugeordneten Teilanschluss (4) verbunden ist,
und
bei dem die ansteuerbaren bidirektionalen Leistungshalbleiterschalter der ersten Schaltgruppen (6) und zweiten Schaltgruppen (7) mittels einer mit den ansteuerbaren bidirektionalen Leistungshalbleiterschaltern verbundenen Ansteuerschaltung (11 ) angesteuert werden, **dadurch gekennzeichnet,**
**dass** ein in jeweils ein Teilumrichtersystem (5) fliessender Strom (i) mittels eines zwischen dem Klemmschaltgruppenanschluss (9) und dem zugehörigen Verschaltpunkt
(10) eingeschalteten Stromsensors (12) gemessen wird,
**dass** der Strom (i) einer Stromüberwachungseinrichtung (13) der Ansteuerschaltung (11 ) zugeführt wird und auf einen der Stromüberwachungseinrichtung (13) zugeführten Stromreferenzwert (I_{ref}) hin überwacht wird, und
**dass** falls der Strom (i) den Stromreferenzwert (I_{ref}) überschreitet die ansteuerbaren bidirektionalen Leistungshalbleiterschalter der ersten Schaltgruppe (6) und zweiten Schaltgruppe (7) des zugehörigen Teilumrichtersystems (5) derart angesteuert werden, dass das Teilumrichtersystem (5) abgeschaltet wird.

11. Verfahren nach Anspruch 9, **dadurch gekennzeichnet, dass** falls der Strom (i) den Stromreferenzwert (I_{ref}) überschreitet die als ansteuerbare bidirektionale Leistungshalbleiterschalter ausgeführten Leistungshalbleiterschalter der Klemmschaltgruppen (8) eines jeden Teilumrichtersystems (5) derart angesteuert werden, dass die Umrichterschaltung abgeschaltet wird.

12. Verfahren nach Anspruch 10, **dadurch gekennzeichnet, dass** falls der Strom (i) den Stromreferenzwert (I_{ref}) überschreitet die als ansteuerbare bidirektionale Leistungshalbleiterschalter ausgeführten Leistungshalbleiterschalter der Klemmschaltgruppen (8) des zugehörigen Teilumrichtersystems (5) derart angesteuert werden, dass das Teilumrichtersystem (5) abgeschaltet wird.

13. Verfahren nach Anspruch nach einem der Ansprüche 9 bis 12, **dadurch gekennzeichnet, dass** der Stromreferenzwert (I_{ref}) manuell vorgegeben wird.

14. Verfahren nach Anspruch nach Anspruch nach einem der Ansprüche 9 bis 12, **dadurch gekennzeichnet, dass** der Stromreferenzwert (I_{ref}) von einer Umrichterregeleinrichtung (14) berechnet wird.
